# EUROPEAN PATENT SPECIFICATION

(11) **EP 2 099 853 B1**
(45) Date of publication and mention of the grant of the patent: **09.02.2011**
(21) Application number: 07857634.5
(22) Date of filing: 14.12.2007
(51) Int. Cl.: C08K 3/00, C08K 5/21, C08K 13/02, C08L 27/06, C08L 27/24, C08K 9/04, C08L 71/02

(54) **FILLED PLASTIC MATERIAL COMPOSITION**
GEFÜLLTE KUNSTSTOFFZUSAMMENSETZUNG
COMPOSITION DE MATÉRIAU REMPLIE DE PLASTIQUE

(30) Priority: 14.12.2006 US 869973 P
(43) Date of publication of application: 16.09.2009
(73) Proprietor: Lubrizol Limited, Hazelwood Derby Derbyshire DE56 4AN (GB)
(72) Inventor: THETFORD, Dean, Blackley Greater Manchester M9 8ZS (GB); SUNDERLAND, Patrick J., Blackley Manchester M9 8ZS (GB); SCHOFIELD, John D., Blackley Manchester M9 8ZS (GB)
(74) Representative: von Kreisler Selting Werner
(86) International application number: PCT/EP2007/064000
(87) International publication number: WO 2008/071800

(56) References cited:
- JP-A- 57 180 664
- US-A- 4 251 436
- US-A- 4 294 752
- US-A- 5 785 894
- US-A- 5 981 624

## Description

### FIELD OF INVENTION

The invention relates to a composition containing a particulate solid, plastic material (such as a vinyl chloride polymer), and a compound containing an acidic group.

### BACKGROUND OF THE INVENTION

In plastic materials such as polyvinyl chloride, the use of fillers is known. The presence of the fillers is known as a means of imparting dimensional rigidity and lower costs of final plastic materials. However, advantages of fillers are balanced against at least one disadvantage including (i) slower processing during manufacture of the plastic materials, and (ii) diminished impact strength. Further, the presence of fillers tend to increase energy costs associated with manufacturing plastic materials because it is desirable to have uniform distribution of the filler in the plastic materials. Uniform distribution of fillers typically results in the consistent properties of the plastic materials. Consequently, only low loadings of filler are employed in production of plastic materials, particularly polyvinyl chloride.

In order to overcome a number of the difficulties highlighted above, attempts have been made to employ coupling agents or other additives to the filler to promote compatibility with plastic materials. Attempts include disclosures in U.S. Patents 3,344,107, or 3,404,023, or 3,926,873, or 4,094,853, or 4.098,758, or 4,294,752.

U.S. Patent 4,294,752 discloses the use of a lower alkoxylated alkyl acid phosphate ester as an additive in filled vinyl chloride polymer compositions to provide improved processing conditions and impact resistance of the filled plastic.

Hence, there is a need for providing a composition with plastic materials and fillers, whilst overcoming problems associated with the art. The present invention provides such a composition.
JP-A-57-180664 discloses the use as dispersant for filled PVC compositions of the reaction product of PEG and various carboxylic acid esters.
US-A-4,251,436 discloses the use as dispersant for filled PVC compositions of mono (n=1) or diesters (n=2) of a phosphate.
US-A-4,294,752 discloses the use as dispersant for filled PVC compositions of phosphate esters such as those derived from PEG.
US-A-5,785,894 and US-A-5,981,624 disclose phosphate ester dispersants and their use in reduced shade paints and inks.

### SUMMARY OF THE INVENTION

In one embodiment, the invention provides a composition comprising a particulate solid, a vinyl chloride polymer (such as a polyvinyl chloride or a chlorinated poly vinyl chloride) and a compound (which may also be referred to as a dispersant) obtained/obtainable by reacting a polyethylene glycol with a molar excess of a hydroxycarboxylic acid containing from 4 to 17 carbon atoms or lactone thereof and/or with a C₃₋₄-alkylene oxide to form a polymeric diol and phosphating the diol by reaction with a phosphating agent to give a phosphate ester. A more detailed description of the compound is disclosed in European Patent Application EP 0 765 356.
In one embodiment, the invention provides for the use of a compound obtained/obtainable by reacting a polyethylene glycol with a molar excess of a hydroxycarboxylic acid containing from 4 to 17 carbon atoms or lactone thereof and/or with a C₃₋₄-alkylene oxide to form a polymeric diol and phosphating the diol by reaction with a phosphating agent to give a phosphate ester, as a dispersant for a particulate solid in a vinyl chloride polymer.

### DETAILED DESCRIPTION OF THE INVENTION

The present invention provides a composition as disclosed herein above.

In one embodiment, the compound is dispersed within the composition. In one embodiment, the compound is uniformly dispersed within the composition.

In one embodiment, the plastic material includes a vinyl chloride polymer. In one embodiment the vinyl chloride polymer is selected from the group consisting of polyvinyl chloride and chlorinated polyvinyl chloride. The vinyl chloride polymer may be a homopolymer or a copolymer. In one embodiment the chlorinated PVC may have a chlorine content of from 50 to 75 weight %, in another embodiment the chlorine content is from 55 to 70 weight %, desirably from 57 to 68 weight %.

In one embodiment, the vinyl chloride polymer includes a homopolymer.

In one embodiment, the vinyl chloride polymer includes a copolymer.

When a vinyl chloride copolymer is employed as the plastic material in the invention, the copolymer may be formed by copolymerising vinyl chloride with a comonomer. Examples of suitable comonomers include vinyl esters such as vinyl acetate, alkyl (meth)acrylates such as ethyl acrylate, butyl acrylate, methyl methacrylate, acrylonitrile, dialkyl vinyl phosphonates (such as bis(betachloroethyl)vinylphosphonate) and chlorinated PVC.

A more detailed description of the phosphate ester dispersant as disclosed in European Patent Application EP 0 765 356, specifically in paragraphs 7 to 24. The phosphate ester may be in the free acid form or it may form a salt with an alkali metal, ammonia, an amine, alkanolamine or quaternary ammonium cation. The phosphate ester group may also be further partially esterified by reaction with an alcohol or may form a salt with an alkanolamine.

The particulate solid may be any solid material which is used with polymeric materials and specifically includes such solids used as fillers. The particulate solids may be in the form of a granular material or in the form of a powder, often a blown powder. Examples include calcium carbonate, calcium sulphate, calcium oxide, barium sulphate, barium carbonate, magnesium oxide, magnesium hydroxide, titanium dioxide, iron oxide, calcium and magnesium silicates, aluminosilicates, kaolin, mica, talc, chalk, metal fibres and powders, zinc, aluminium, aluminium trihydroxide, glass fibres, refractory fibres, carbon black including reinforcing and non-reinforcing carbon black, alumina, quartz, wood flour, powdered paper/fibre, asbestos, crysatille, anthophylite, crocidolite, wollastonite, attapulgite and the like, particulate ceramic materials such as alumina, silica, zirconia, titania, silicon nitride, aluminium nitride, boron nitride, silicon carbide, boron carbide, mixed silicon-aluminium nitrides and metal titanates; particulate magnetic materials such as the magnetic oxides of transition metals, often iron and chromium, e.g., gamma-Fe₂O₃, Fe₃O₄, and cobalt-doped iron oxides, ferrites, e.g., barium ferrites; and metal particles, for instance metallic iron, nickel, cobalt, copper and alloys thereof.

In one embodiment, the particulate solid (or filler) is selected from the group consisting of calcium carbonate, magnesium carbonate, magnesium hydroxide, alumina trihydrate, silica, alumina silicate, magnesium silicate, magnesium oxide, iron oxide, diatomaceous earth, hydrated silicates, calcium oxide, mica, talc, kaolin, and bentonite. In one embodiment, the inorganic particulate includes calcium carbonate.

Optionally, the compositions of the invention further comprise other conventional additives in conventional amounts, such as: plasticizers, flame retardants, lubricants, impact modifiers, blowing agents, or stabilizers.

The following examples provide illustrations of the invention. These examples are non exhaustive and are not intended to limit the scope of the invention.

### EXAMPLES

Dispersant 1: is Example 44 of U.S. Patent 5,785,894, (phosphate ester ofPluronic 17R4).

Dispersant 2: is Example 13 of U.S. Patent 5,981,624, (phosphate ester of Synperonic PE/L81).

Comparative Examples: are prepared by mixing 100 parts polyvinyl chloride (Oxy Vinyls™ 225), 3 parts of Arkema Durastrength™ 200 (acrylic modifier), 0.4 parts calcium stearate, 0.1 parts polyethylene wax (Honeywell®AC-6A), 0.8 parts paraffin wax (Ferro Petrac®165 wax), 1 part organo-tin stabiliser (Akzo Nobel T5201), and 20 parts calcium carbonate (Camel Fine ST) in a Henschel at 60°C, to form mixtures. The mixture is then processed in a Brabender apparatus at 3 different speeds. The speeds are 15 rpm, 25 rpm and 35 rpm. The Brabender apparatus is used with barrel temperatures of 168°C (335°F), 185°C (365°F), and 190°C (375°F). The average torque readings and output of material from the Brabender Intelli-Torque Plasti-Corder torque rheometry system are recorded.

Compositions of the invention are prepared in a similar manner as the comparative examples, except, 1.27 parts of dispersant 1 or dispersant 2 are added. The results obtained for the comparative examples and examples of the invention are as follows:

| | | | Brabender Results | |
|---|---|---|---|---|
| Composition | Dispersant | Speed of Rotation (rpm) | Torque (m g) | Product Processed (g/min) |
| Comparative 1 | None | 15 | 3535 | 45 |
| Example 1 | Dispersant 1 | 15 | 2744 | 41.5 |
| Example 2 | Dispersant 2 | 15 | 3525 | 50.3 |
| Comparative 2 | None | 25 | 4484 | 69.8 |
| Example 3 | Dispersant 1 | 25 | 2983 | 62.1 |
| Example 4 | Dispersant 2 | 25 | 4094 | 77.5 |
| Comparative 2 | None | 35 | 5066 | 92.1 |
| Example 5 | Dispersant 1 | 35 | 3130 | 82.9 |
| Example 6 | Dispersant 2 | 35 | 4472 | 103.8 |

Overall, the data demonstrates that the compositions of the invention are capable of at least one of (i) reducing the torque of the polyvinyl chlorides formed; or (ii) and/or increasing the throughput of mixture through the Brabender, thus allowing for more efficient production of polyvinyl chloride.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

## Claims

1. A composition comprising a particulate solid, a vinyl chloride polymer and a compound obtained/obtainable by reacting a polyethylene glycol with a molar excess of a hydroxycarboxylic acid containing from 4 to 17 carbon atoms or lactone thereof and/or with a C₃₋₄-alkylene oxide to form a polymeric diol and phosphating the diol by reaction with a phosphating agent to give a phosphate ester.

2. The composition of claim 1, wherein the vinyl chloride polymer is selected from the group consisting of polyvinyl chloride and chlorinated polyvinyl chloride.

3. The composition of any of claims 1 or 2, wherein the particulate solid is selected from the group consisting of calcium carbonate, magnesium carbonate, magnesium hydroxide, alumina trihydrate, silica, alumina silicate, magnesium silicate, magnesium oxide, iron oxide, diatomaceous earth, hydrated silicates, calcium oxide, mica, talc, kaolin, and bentonite.

4. The composition of any of claims 1 to 3, wherein the vinyl chloride polymer is a copolymer.

5. The composition of any of claims 1 to 4, wherein the particulate solid is calcium carbonate.

6. Use of a compound obtained/obtainable by reacting a polyethylene glycol with a molar excess of a hydroxycarboxylic acid containing from 4 to 17 carbon atoms or lactone thereof and/or with a C₃₋₄-alkylene oxide to form a polymeric diol and phosphating the diol by reaction with a phosphating agent to give a phosphate ester, as a dispersant for a particulate solid in a vinyl chloride polymer.

7. The use of claim 6, wherein the vinyl chloride polymer is selected from the group consisting of polyvinyl chloride and chlorinated polyvinyl chloride.

8. The use of any of claims 6 or 7, wherein the particulate solid is selected from the group consisting of calcium carbonate, magnesium carbonate, magnesium hydroxide, alumina trihydrate, silica, alumina silicate, magnesium silicate, magnesium oxide, iron oxide, diatomaceous earth, hydrated silicates, calcium oxide, mica, talc, kaolin, and bentonite.

9. The use of any of claims 6 to 8, wherein the vinyl chloride polymer is a copolymer.

10. The use of any of claims 6 to 9, wherein the particulate solid is calcium carbonate.

## Patentansprüche

1. Zusammensetzung, umfassend einen teilchenförmigen Feststoff, ein Vinylchlorid-Polymer und eine Verbindung, die durch Umsetzen eines Polyethylenglycols mit einem molaren Überschuss einer Hydroxycarbonsäure, die 4 bis 17 Kohlenstoffatome enthält, oder einem Lacton davon und/oder mit einem C₃₋₄-Alkylenoxid unter Bildung eines polymeren Diols und Phosphatieren des Diols durch Reaktion mit einem Phosphatierungsmittel unter Bildung eines Phosphorsäureesters erhalten wurde/erhältlich ist.

2. Zusammensetzung gemäß Anspruch 1, wobei das Vinylchlorid-Polymer aus der Gruppe ausgewählt ist, die aus Polyvinylchlorid und chloriertem Polyvinylchlorid besteht.

3. Zusammensetzung gemäß einem der Ansprüche 1 oder 2, wobei der teilchenförmige Feststoff aus der Gruppe ausgewählt ist, die aus Calciumcarbonat, Magnesiumcarbonat, Magnesiumhydroxid, Aluminiumoxid-Trihydrat, Siliciumoxid, Aluminiumoxidsilikat, Magnesiumsilicat, Magnesiumoxid, Eisenoxid, Diatomeenerde, hydratisierte Silikate, Calciumoxid, Glimmer, Talk, Kaolin und Bentonit besteht.

4. Zusammensetzung gemäß einem der Ansprüche 1 bis 3, wobei das Vinylchlorid-Polymer ein Copolymer ist.

5. Zusammensetzung gemäß einem der Ansprüche 1 bis 4, wobei es sich bei dem teilchenförmigen Feststoff um Calciumcarbonat handelt.

6. Verwendung einer Verbindung, die durch Umsetzen eines Polyethylenglycols mit einem molaren Überschuss einer Hydroxycarbonsäure, die 4 bis 17 Kohlenstoffatome enthält, oder einem Lacton davon und/oder mit einem C₃₋₄-Alkylenoxid unter Bildung eines polymeren Diols und Phosphatieren des Diols durch Reaktion mit einem Phosphatierungsmittel unter Bildung eines Phosphorsäureesters erhalten wurde/erhältlich ist, als Dispergiermittel für einen teilchenförmigen Feststoff in einem Vinylchlorid-Polymer.

7. Verwendung gemäß Anspruch 6, wobei das Vinylchlorid-Polymer aus der Gruppe ausgewählt ist, die aus Polyvinylchlorid und chloriertem Polyvinylchlorid besteht.

8. Verwendung gemäß einem der Ansprüche 6 oder 7, wobei der teilchenförmige Feststoff aus der Gruppe ausgewählt ist, die aus Calciumcarbonat, Magnesiumcarbonat, Magnesiumhydroxid, Aluminiumoxid-Trihydrat, Siliciumoxid, Aluminiumoxidsilikat, Magnesiumsilicat, Magnesiumoxid, Eisenoxid, Diatomeenerde, hydratisierte Silikate, Calciumoxid, Glimmer, Talk, Kaolin und Bentonit besteht.

9. Verwendung gemäß einem der Ansprüche 6 bis 8, wobei das Vinylchlorid-Polymer ein Copolymer ist.

10. Verwendung gemäß einem der Ansprüche 6 bis 9, wobei es sich bei dem teilchenförmigen Feststoff um Calciumcarbonat handelt.

## Revendications

1. Composition comprenant un solide particulaire, un polymère de chlorure de vinyle et un composé obtenu/pouvant être obtenu par la réaction d'un polyéthylène glycol avec un excès molaire d'un acide hydroxycarboxylique contenant 4 à 17 atomes de carbone ou une lactone de celui-ci et/ou avec un oxyde d'alkylène en C₃₋₄ pour former un diol polymérique et la phosphatation du diol par réaction avec un agent phosphatant pour obtenir un ester phosphorique.

2. Composition selon la revendication 1, dans laquelle le polymère de chlorure de vinyle est choisi dans le groupe consistant en polychlorure de vinyle et polychlorure de vinyle chloré.

3. Composition selon l'une quelconque des revendications 1 ou 2, dans laquelle le solide particulaire est choisi dans le groupe consistant en carbonate de calcium, carbonate de magnésium, hydroxyde de magnésium, trihydrate d'alumine, silice, silicate d'alumine, silicate de magnésium, oxyde de magnésium, oxyde de fer, terre de diatomées, silicates hydratés, oxyde de calcium, mica, talc, kaolin et bentonite.

4. Composition selon l'une quelconque des revendications 1 à 3, dans laquelle le polymère de chlorure de vinyle est un copolymère.

5. Composition selon l'une quelconque des revendications 1 à 4, dans laquelle le solide particulaire est le carbonate de calcium.

6. Utilisation d'un composé obtenu/pouvant être obtenu par la réaction d'un polyéthylène glycol avec un excès molaire d'un acide hydroxycarboxylique contenant 4 à 17 atomes de carbone ou une lactone de celui-ci et/ou avec un oxyde d'alkylène en C₃₋₄ pour former un diol polymérique et la phosphatation du diol par réaction avec un agent phosphatant pour obtenir un ester phosphorique, comme dispersant pour un solide particulaire dans un polymère de chlorure de vinyle.

7. Utilisation selon la revendication 6, dans laquelle le polymère de chlorure de vinyle est choisi dans le groupe consistant en polychlorure de vinyle et polychlorure de vinyle chloré.

8. Utilisation selon l'une quelconque des revendications 6 ou 7, dans laquelle le solide particulaire est choisi dans le groupe consistant en carbonate de calcium, carbonate de magnésium, hydroxyde de magnésium, trihydrate d'alumine, silice, silicate d'alumine, silicate de magnésium, oxyde de magnésium, oxyde de fer, terre de diatomées, silicates hydratés, oxyde de calcium, mica, talc, kaolin et bentonite.

9. Utilisation selon l'une quelconque des revendications 6 à 8, dans laquelle le polymère de chlorure de vinyle est un copolymère.

10. Utilisation selon l'une quelconque des revendications 6 à 9, dans laquelle le solide particulaire est le carbonate de calcium.
